# EUROPÄISCHE PATENTANMELDUNG

(11) **EP 1 129 828 A1**
(43) Veröffentlichungstag der Anmeldung: **05.09.2001**
(21) Anmeldenummer: 01105117.4
(22) Anmeldetag: 02.03.2001
(51) Int. Cl.: B25J 9/04, B25J 19/00, B05B 13/04

(54) **Roboter zum Beschichten oder Behandeln von Werkstücken**

(30) Priorität: 03.03.2000 DE 10010615
(71) Anmelder: Dürr Systems GmbH, 70435 Stuttgart (DE)
(72) Erfinder: Hezel, Thomas, Dipl.-Ing., 71679 Asperg (DE)
(74) Vertreter: Heusler, Wolfgang, Dipl.-Ing.

(57) **Zusammenfassung**

Ein Roboter zum Beschichten von Werkstücken hat einen um eine vertikale Achse drehbaren Grundkörper (2), der über ein unter 45° schräg angeordnetes Gelenk (6) mit einem Roboterarm (12) verbunden ist, der zwischen einer waagerechten und einer senkrechten Position verschwenkt werden kann, wobei er wegen der Schräglage des Gelenks (6) seitlich ausweicht. Am anderen Ende des Arms (12) ist schwenkbar ein zweiter Roboterarm (16) angelenkt. Die durch das Schräggelenk (6) erweiterten Bewegungsmöglichkeiten des Roboters erlauben auch eine Behandlung schwer zugänglicher Teile im Inneren von Werkstücken.

## Beschreibung

Die Erfindung betrifft einen Roboter mit den im Oberbegriff des Anspruchs 1 angegebenen Merkmalen.

Zum Beschichten von Werkstücken, beispielsweise zum Lackieren von Fahrzeugkarossen, werden üblicherweise Knickarmroboter verwendet, wie sie z.B. aus der US 4 785 760 oder der EP-A-0 796 665 bekannt sind, und die einen um eine vertikale erste Achse drehbaren Grundkörper haben, an dem ein erster Arm um eine horizontale zweite Achse schwenkbar gelagert ist. Ein zweiter Arm ist an dem ersten über eine zu der zweiten Achse parallelen dritten Achse schwenkbar gelagert und hat ein Handgelenk, an dem ein Applikationsorgan, wie z.B. ein Zerstäuber, montiert ist. Nachteilig sind bei solchen Knickarmrobotern ihre begrenzten Bewegungsmöglichkeiten, da beispielsweise der erste Arm mit Hilfe der zweiten Achse nur nach vorn oder hinten in eine durch die Stellung des Grundkörpers um die erste Achse bestimmte Richtung geschwenkt werden kann. Der Roboter arbeitet also, bedingt durch die Stellung des Grundkörpers, immer nur zielgerichtet auf das Objekt zu. Arbeitet er direkt an Werkstücken oder soll er in zu bearbeitende Werkstücke eintauchen, dann kann es erforderlich sein, daß Ecken und Kanten umgangen werden müssen, beispielsweise zum Lackieren von Motor- und Kofferräumen sowie Türeinstiegsbereichen von Kraftfahrzeugkarossen, und dies ist mit einem solchen Roboter oft nicht möglich. Insbesondere ist es sehr schwierig, das Applikationsorgan zur Innenlackierung von Fahrzeugkarossen in der erforderlichen Weise durch deren Öffnungen in den Innenraum einzuführen.

Der Erfindung liegt die Aufgabe zugrunde, einen Roboter zu schaffen, dessen Applikationsorgan oder Werkzeug besser in Innenräume eintauchen und dabei Ecken und Kanten des Werkstücks ausweichen kann.

Diese Aufgabe wird durch die im Anspruch 1 angegebenen Merkmale gelöst. Weiterbildungen der Erfindung sind in den Unteransprüchen gekennzeichnet.

Durch die erfindungsgemäße Anordnung der zweiten Achse unter einem schrägen statt einem 90°-Winkel zur ersten Achse ergeben sich neue Bewegungsmöglichkeiten der Arme, die zu einer Erweiterung des Arbeitsbereichs des Applikationsorgans führen, was insbesondere bei Farbsprühvorrichtungen den Bereich möglicher Sprührichtungen vergrößert, so daß sich Innenräume besser und vollständiger lackieren lassen.

Zweckmäßigerweise läßt sich der erste Arm mit einem Drehgelenk versehen, dessen Drehachse mit der Längsachse dieses Arms zusammenfällt, so daß der erste Arm um seine eigene Längsachse drehbar ist und der Bewegungsbereich des Applikationsorgans noch weiter vergrößert wird, also beispielsweise im Falle eines Lakkierroboters Innenräume besser und vollständiger lackiert werden können.

Ein besonderer Vorteil der Erfindung besteht darin, daß der zweite Arm sich durch die schräge Anordnung des Gelenks zum Grundkörper gleichzeitig nach vorn und zur Seite bewegen kann, ohne daß der Grundkörper dazu verdreht werden müßte. Die dabei auftretende Änderung der Orientierung des Applikationswerkzeugs läßt sich andererseits durch die Drehbarkeit des ersten Arms um seine Längsachse ohne weiteres korrigieren, wenn dies erforderlich ist.

Ein zusätzlicher Vorteil ergibt sich hierbei aus einer Verbesserung der Kabelführungen für die Steuerung der Bewegungsmotoren des Roboters und die Schlauchführungen bei Lackierrobotern, da die Kabel und Schläuche weniger starken Knicken und Verwindungen ausgesetzt sind. Dies gilt insbesondere, wenn die Kabel für die Antriebsmotoren des Rotors und/oder die Versorgungsschläuche für das Applikationsorgan aus dem Innenraum des drehbaren Grundkörpers durch das schräge Verbindungsgelenk in den Innenraum des ersten Arms geführt werden, wobei sich ein bei 45° liegender Winkel der zweiten Achse gegenüber der ersten Achse als besonders günstig erweist. Bei den bekannten Knickarmrobotern sind dagegen die Innendurchführungen für Kabel und Schläuche sehr eng und mehrere 90°-Umlenkungen erforderlich, was hochflexible teuere Kabel erfordert, während sich andere Leitungen, wie Luft- oder Medienschläuche wegen zu kleiner Biegeradien sowie starker Umlenkungen und Verdrillungen nicht mehr im Inneren der Gelenke führen lassen, sondern bisher außerhalb der Gelenke verlegt werden mußten. Ordnet man im Gegensatz zu einem solchen Knickarmroboter die Achsen unter einem kleineren Winkel als 90° zueinander an, so kann man einen kugelförmigen Bewegungsbereich des Applikationsorgans bei gleichzeitiger Innendurchführung von Leitungen und Kabeln erreichen. Die wegen des schrägen Gelenks zwischen Grundkörper und erstem Arm mögliche Innendurchführung ergibt sehr einfache, kurze und direkte Schlauch- und Kabelwege, bei der kleine Belastungen der Kabel und Schläuche auftreten und deren Lebensdauer entsprechend erhöht wird.

Die Erfindung wird anhand der in der Zeichnung veranschaulichten Ausführungsbeispiele näher erläutert. Es zeigen:
- Fig. 1: eine perspektivische Schemaansicht eines erfindungsgemäßen Roboters in gestreckter Position;
- Fig. 2 bis 7: Ansichten des Roboters gemäß Fig. 1 in verschiedenen Stellungen zur Veranschaulichung der Bewegungsmöglichkeiten;
- Fig. 8: eine Ansicht des Roboters gemäß Fig. 1 in einer anderen Position unter Veranschaulichung der inneren Durchgänge;
- Fig. 9: ein anderes Ausführungsbeispiel der Erfindung; und
- Fig. 10: eine Draufsicht auf den Roboter gemäß Fig. 9 von oben.

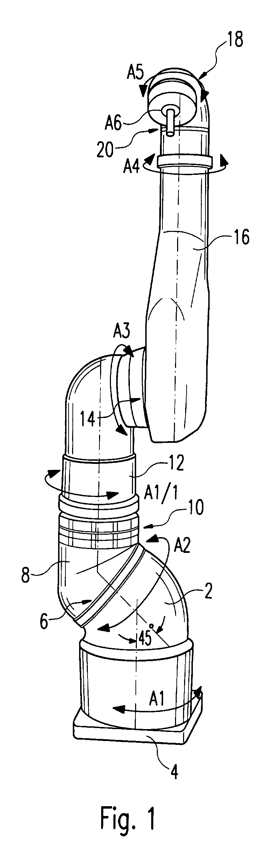

In Fig. 1 erkennt man einen Grundkörper 2, der auf einem Sockel 4 um eine vertikale Achse A1 drehbar montiert ist. An seinem oberen Ende ist der Grundkörper 2 über ein schräges Gelenk 6 mit einem Zwischenteil 8 verbunden, wobei die Drehachse A2 dieses Zwischengelenks im dargestellten Ausführungsbeispiel einen Winkel von 45° mit der die Achse A2 schneidenden Drehachse A1 des Grundkörpers 2 bildet. Das Zwischenteil 8 setzt sich über ein Drehgelenk 10 in einem Arm 12 fort, wobei die Drehachse A1/1 dieses Gelenks mit der Längsachse des Arms zusammenfällt. Am oberen Ende des Arms 12 ist über ein Drehgelenk 14 mit der Drehachse A3 ein zweiter Arm 16 angelenkt, an dessen anderem Ende eine Handkonstruktion 18 mit drei Drehachsen A4, A5 und A6 sitzt, welche bei 20 ein Applikationsorgan (nicht dargestellt) beispielsweise in Form eines Zerstäubers trägt. Bei dem dargestellten Beispiel verläuft die Drechachse 13 senkrecht zur Achse A1/1.

Für die Handachsen von Lackierrobotern sind zweckmäßige Schräggelenkkonstruktionen an sich bekannt und üblich. Auch die Handkonstruktion 18 ist entsprechend ausgebildet. Infolge des Schräggelenks 6 am Roboterfuß werden aber die Bewegungsmöglichkeiten des hier beschriebenen Roboters vor allem für die Erreichbarkeit von Stellen des zu bearbeitenden Werkstücks erheblich erweitert, die auch mit den bekannten dreiachsigen Handkonstruktionen nicht optimal beschichtet werden konnten.

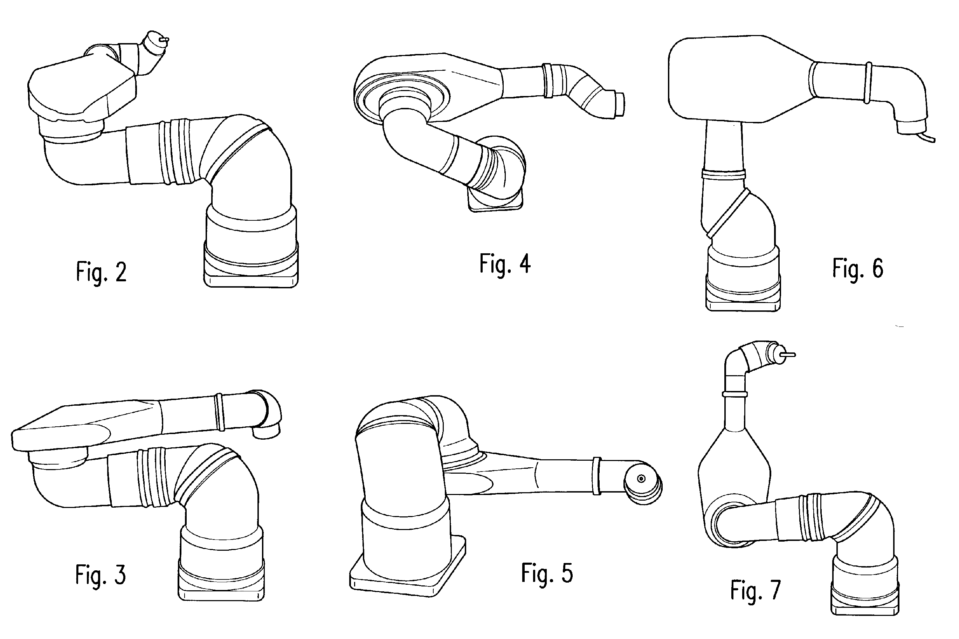

Dieser Vorteil ist aus den Figuren 2 bis 7 ohne weiteres ersichtlich ist, welche verschiedene Roboterpositionen veranschaulichen. So sieht man beispielsweise, daß das Schräggelenk 6 mit seiner 45°-Achse A2 eine Bewegung des Armes 12 zwischen waagerechter und senkrechter Richtung erlaubt (während andere Winkel zwischen den Achsen A2 und A1 die Wahl anderer Bereiche möglicher Richtungen erlauben). Wenn der Arm 12 etwa aus der Senkrechten um das Schräggelenk 6 nach unten schwenkt, weicht er aber gleichzeitig seitlich aus, was etwa beim Lackieren bestimmter Werkstückformen sehr vorteilhaft ist. Die dabei auftretende Verdrehung des Armes 12 läßt sich erforderlichenfalls mit dem Gelenk 10 kompensieren.

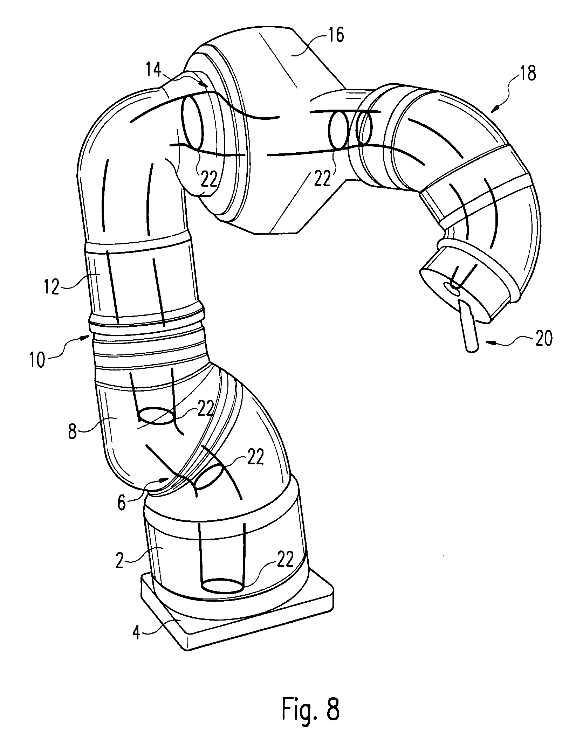

In den Figuren 2 und 3 ist der Roboter mit waagerecht eingestelltem Arm 12 gezeigt, wobei der zweite Arm 16 sich oberhalb des ersten Armes 12 befindet und einen Kreis parallel zur horizontalen Grundfläche des Sockels beschreiben kann. Bei der Position gemäß Fig. 5 verläuft der erste Arm 12 ebenfalls waagerecht, ist jedoch in sich gegenüber der Position nach den Figuren 2 und 3 um 180° um das Gelenk A1/1 verdreht, so daß die Bewegungsebene des zweiten Arms 16 unter ihm liegt. Auch gemäß Fig. 7 liegt der erste Arm 12 waagerecht, jedoch über das Gelenk 10 in seiner Orientierung gegenüber den Figuren 2, 3 und 5 um 90° verdreht, so daß die Achse A3 des Gelenkes 14 nicht wie in diesen Figuren senkrecht, sondern waagerecht verläuft und der zweite Arm 16 nach oben geschwenkt ist.

Bei der Konstellation nach Fig. 4 befindet sich das Schräggelenk 6 in einer Orientierung, bei welcher der erste Arm 12 schräg nach oben verläuft, während er in der Position nach Fig. 6 gerade nach oben zeigt, wobei in beiden Fällen der zweite Arm 16 sich in einer senkrechten Ebene bewegen kann; wird er in Fig. 6 nach oben gerichtet, so nimmt der Roboter die gestreckte Stellung ein, wie sie auch Fig. 1 zeigt.

Fig. 8 veranschaulicht einen zusätzlichen Vorteil der Erfindung, nämlich relativ weite freie Durchgänge 22 für die Durchführung der Kabel und Leitungen geschützt im Innern des Roboters ohne scharfe Knickstellen. Bei einer praktischen Ausführungsform hat sich eine komplette Innenschlauchdurchführung vom Sockel 2 bis zum Arm 16 mit einem Durchmesser von 200 mm realisieren lassen, womit man kurze und direkte Schlauchwege bei geringen (statischen und dynamischen) Umlenkungen erreicht, und eine Konzentration der Achsantriebe auf wenige Räume, in denen die Motoren untergebracht sind, was zu einfachen Kabel- und Signalwegen führt. Bei dem vorzugsweise mit 45° gewählten Schrägwinkel der Achse A2 des Gelenks 6 zur Achse A1 erhält man einen maximalen Schwenkwinkel für den Arm 12 von 90°, so daß man bei entsprechender Einstellung des Grundkörpers um seine Drehachse A1 (bereits ohne Berücksichtigung der zusätzlichen Bewegungsmöglichkeiten durch die Gelenke 10, 14 und die Handachse) jeden Punkt einer halbkugelförmigen Fläche erreichen kann. Der Antrieb des Schräggelenkes 6 sowie der anderen Gelenke läßt sich in bekannter Weise mit Hilfe von Kegelrädern bewerkstelligen.

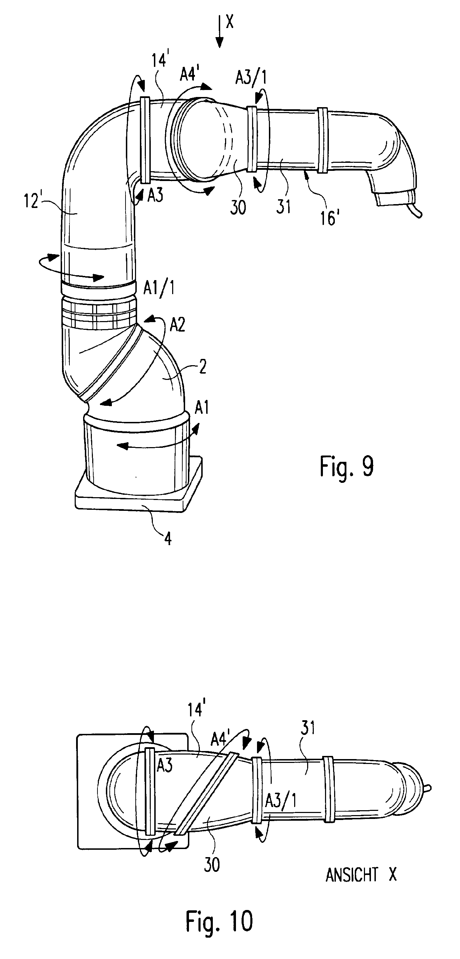

In Weiterbildung oder Abwandlung des oben beschriebenen Ausführungsbeispiels kann sich ein unter 45° oder einem anderen von 90° verschiedenen Winkel schräg angeordnetes Gelenk auch zwischen den beiden Armen des hier betrachteten Knickarmroboters befinden, wie in Fig. 9 dargestellt ist. Vom Sockel 4 bis zu der schrägen Achse A2 und der Achse A1/1 kann dieser Roboter dem Ausführungsbeispiel nach Fig. 1 entsprechen. An dem ersten Arm 12' ist wie bei Fig. 1 ein Gelenkelement 14' um eine zu der Längsachse des Armes 12' senkrechte Achse A3 drehbar montiert. Der zweite Arm 16' ist hier aber an dem Gelenkelement 14' um eine Achse A4' schwenkbar gelagert, die unter dem genannten Winkel zu der Längsachse des Armes 16' verläuft. Wie aus der Draufsicht gemäß Fig. 10 ersichtlicht ist, verläuft die Schwenkebene der Achse A4' vertikal, wenn der Arm 16' horizontal liegt. Dadurch werden dieselben Bewegungsmöglichkeiten, die durch die Achse A2 bezüglich der vertikalen Achse A1 des Roboters erreicht werden, bezüglich der beispielsweise horizontalen Orientierung des Armes 16' erreicht. Ein Bewegungsausgleich erfolgt dadurch, daß der Arm 16' und die mit seiner Längsachse zusammenfallende Achse A3/1 gegeneinander verdrehbare Teile 30 bzw. 31 hat. Die schräge Achse A4' zwischen den beiden Armen kann nicht nur bei dem dargestellten Beispiel sinnvoll sein, sondern in anderen Fällen auch bei einem vom Sockel bis zum Bereich des ersten Armes konventionellen Roboter ohne die schräge Achse A2.

Die Antriebskonstruktionen für die Drehbewegungen um mindestens einige der beschriebenen Achsen einschließlich der schrägen Achsen A2 und A4' sind vorzugsweise in der an sich bekannten Weise als elektrischer Direktantrieb ohne Untersetzungsgetriebe realisiert mit hohl ausgeführtem Stator oder Rotor. Dadurch werden große Innendurchführungen beispielsweise für die Schläuche und Leitungen eines Lackierroboters ermöglicht.

## Patentansprüche

1. Roboter zum Beschichten oder Behandeln von Werkstücken mit
- einem auf einem Sockel (4) um eine erste Achse (A1) drehbar gelagerten Grundkörper (2),
- einem ersten Arm (12), der an dem drehbaren Grundkörper um eine zweite Achse (A2) schwenkbar gelagert und in eine zu der ersten Achse (A1) parallele Position schwenkbar ist,
- und einem an dem ersten Arm (12) um eine dritte Achse (A3) schwenkbar gelagerten zweiten Arm (16), der über bewegbare Zwischenglieder (18) ein Applikationsorgan (20) oder Werkzeug trägt,
**dadurch gekennzeichnet,**
daß die zweite Achse (A2) unter einem von 90° verschiedenen Winkel zu der ersten Achse (A1) verläuft.

2. Roboter nach Anspruch 1, **dadurch gekennzeichnet,** daß der Winkel 45° beträgt.

3. Roboter nach Anspruch 1 oder 2, **dadurch gekennzeichnet,** daß der erste Arm (12) mit einem Drehgelenk (10) versehen ist, dessen Drehachse (A1/1) mit der Längsachse des Arms (12) zusammenfällt, so daß der erste Arm um seine eigene Längsachse drehbar ist.

4. Roboter nach Anspruch 1, 2 oder 3, **dadurch gekennzeichnet,** daß die Kabel für die Antriebsmotoren des Roboters und/oder die Versorgungsschläuche für das Applikationsorgan (20) aus dem Innenraum des drehbaren Grundkörpers (2) durch den Innenraum des den Grundkörper mit dem ersten Arm (12) verbindenden Gelenkes (6) in den Innenraum des ersten Armes geführt wird.

5. Roboter zum Beschichten oder Behandeln von Werkstücken mit
- einem auf einem Sockel (4) um eine erste Achse (A1) drehbar gelagerten Grundkörper (2),
- einem ersten Arm (12'), der an dem drehbaren Grundkörper um eine zweite Achse schwenkbar gelagert und in eine zu der ersten Achse (A1) parallele Position schwenkbar ist,
- und einem an dem ersten Arm (12') oder an einem mit dem ersten Arm verbundenen Drehgelenk (14') um eine dritte Achse (A4') schwenkbar gelagerten zweiten Arm (16'), der über bewegbare Zwischenglieder (18) ein Applikationsorgan oder Werkzeug trägt, insbesondere nach Anspruch 1,
**dadurch gekennzeichnet,**
daß die dritte Achse (A4') unter einem Winkel von 45° oder einem anderen von 90° verschiedenen Winkel zu der Längsachse des zweiten Armes (16') verläuft.

6. Roboter nach einem der vorangehenden Ansprüche, **dadurch gekennzeichnet,** daß der zweite Arm (16,16') um seine Längsachse gegeneinander verdrehbare Teile (30,31) hat.
